# EUROPEAN PATENT SPECIFICATION

(11) **EP 3 032 369 B1**
(45) Date of publication and mention of the grant of the patent: **19.09.2018**
(21) Application number: 15198274.1
(22) Date of filing: 07.12.2015
(51) Int. Cl.: G05D 1/02

(54) **METHODS FOR CLEARING GARBAGE AND DEVICES FOR THE SAME**
VERFAHREN ZUR BESEITIGUNG VON MÜLL UND VORRICHTUNGEN DAFÜR
PROCÉDÉS POUR ÉLIMINER DES ORDURES ET DISPOSITIFS ASSOCIÉS

(30) Priority: 11.12.2014 CN 201410764394
(43) Date of publication of application: 15.06.2016
(73) Proprietor: Xiaomi Inc., Beijing 100085 (CN)
(72) Inventor: ZHANG, Pengfei, Haidian District 100085 (CN); XIA, Yongfeng, Haidian District 100085 (CN); WANG, Yidong, Haidian District 100085 (CN); LIU, Tiejun, Haidian District 100085 (CN)
(74) Representative: Sadler, Peter Frederick

(56) References cited:
- EP-A2- 2 801 313
- US-A1- 2005 192 707
- US-A1- 2014 278 252

## Description

### TECHNICAL FIELD

The present disclosure relates to the field of smart household appliances, and more particularly, relates to methods for clearing garbage and devices for the same.

### BACKGROUND

A garbage robot is a household electric appliance which is capable of automatically performing floor clearance in a room by means of artificial intelligence.

The garbage robot generally operates in an appointed clearance manner. Specifically, a user sets a designated time to the garbage robot, wherein the designated time is generally the time after the user leaves home. The garbage robot will start operating within the designated time to perform floor clearance. EP 2 801 313 A2 and US 2005/192707 A1 describe garbage robots having onboard cameras and sensors to detect for the presence of dust in their surrounding environments.

### SUMMARY

To solve the problem that the clearing efficiency of the garbage robot is low in the related art, embodiments of the present disclosure provide methods for clearing garbage and devices for the same. The following technical solutions are employed.

According to a first aspect of embodiments of the present disclosure, a method for clearing garbage is provided. The method includes:
acquiring monitored data of a monitored region, the monitored data comprising at least one frame of image;
detecting, according to the monitored data, whether garbage is present in the monitored region;
if garbage is present in the monitored region, acquiring location information of the garbage in the monitored region; and sending the location information of the garbage to a garbage robot, the garbage robot being configured to clear the garbage according to the location information. the monitoring apparatus comprises a monitoring camera for capturing images or video.

The step of detecting, according to the monitored data, whether garbage is present in the monitored region comprises:
identifying whether an action of a user exists in the at least one frame of image;
if a user action exists in the at least one frame of image, detecting whether a moving object corresponding to the action is present in the at least one frame of image; and
if a moving object corresponding to the action is present in the at least one frame of image, identifying whether the moving object is garbage according to a preset garbage feature library.

In an embodiment, the acquiring location information of the garbage in the monitored region includes:
acquiring an intersection edge between a wall and a ground in the monitored region according to the monitored data;
modeling the ground according to the intersection edge between the wall and the ground in the monitored region; and
calculating location information of the garbage on the modeled ground.

In an embodiment, the acquiring location information of the garbage in the monitored region includes:
matching a garbage region where the garbage is located in the monitored data with a region where the garbage robot is located in at least one sample image, the sample image being an image previously recorded by a monitoring apparatus when the garbage robot moves or stays in the monitored region, and each sample image being bound with location information synchronously reported by the garbage robot; and
if the matching is successful, determining the location information bound with the matched sample image as the location information of the garbage in the monitored region.

In an embodiment, the method further includes:
recording at least one image as the sample image when the garbage robot moves or stays in the monitored region;
receiving location information synchronously reported by the garbage robot in the recording process;
identifying a region where the garbage robot is located in each sample image; and
binding and storing each sample image, the region where the garbage robot is located in the sample image, and the location information synchronously reported by the garbage robot.

In an embodiment, the method further includes:
detecting whether the garbage is present on the ground in the monitored region; and
performing the step of acquiring location information of the garbage in the monitored region if the garbage is present on the ground in the monitored region.

According to a second aspect of embodiments of the present disclosure, a method for clearing garbage is provided. The method includes:
receiving location information of garbage sent by a monitoring apparatus; and
clearing the garbage according to the location information.

According to a third aspect of embodiments of the present disclosure, a device for clearing garbage is provided. The device includes:
an acquiring module, configured to acquire monitored data of a monitored region;
a detecting module, configured to detect, according to the monitored data, whether garbage is present in the monitored region;
a location module, configured to, if garbage is present in the monitored region, acquire location information of the garbage in the monitored region; anda sending module, configured to send the location information of the garbage to a garbage robot, the garbage robot being configured to clear the garbage according to the location information. In an embodiment, the detecting module includes:
a first detecting sub-module, configured to determine, according to at least one frame of image in the monitored data, whether an action of a user produces garbage; ora second detecting sub-module, configured to acquire a different region between two frames of images in the monitored data by comparison, and detect, according to the different region, whether garbage is present in the monitored region; ora third detecting sub-module, configured to detect whether an image in the monitored data has changed; and if the image in the monitored data has changed, identify whether garbage is present in the changed images. In an embodiment, the location module includes:
an acquiring sub-module, configured to acquire an intersection edge between a wall and a ground in the monitored region according to the monitored data;
a modeling sub-module, configured to model the ground according to the intersection edge between the wall and the ground in the monitored region; and a calculating sub-module, configured to calculate location information of the garbage on the modeled ground. In an embodiment, the location module includes:
a matching sub-module, configured to match a garbage region where the garbage is located in the monitored data with a region where the garbage robot is located in at least one sample image, the sample image being an image previously recorded by a monitoring apparatus when the garbage robot moves or stays in the monitored region, and each sample image being bound with location information synchronously reported by the garbage robot; and a determining sub-module, configured to determine, if the matching is successful, the location information bound with the matched sample image as the location information of the garbage in the monitored region. In an embodiment, the device further includes:
a recording module, configured to record at least one image as the sample image when the garbage robot moves or stays in the monitored region;
a receiving module, configured to receive location information synchronously reported by the garbage robot in the recording process; an identifying module, configured to identify a region where the garbage robot is located in each sample image; and a storing module, configured to bind and store each sample image, the region where the garbage robot is located in the sample image, and the location information synchronously reported by the garbage robot. In an embodiment, the device further includes:
a ground detecting module, configured to detect whether the garbage is present on the ground in the monitored region; and the location module is configured to, if the garbage is present on the ground in the monitored region, perform the step of acquiring location information of the garbage in the monitored region. According to a fourth aspect of embodiments of the present disclosure, a device for clearing garbage is provided. The device includes:
a receiving module, configured to receive location information of garbage sent by a monitoring apparatus; and
a clearing module, configured to clear the garbage according to the location information.

According to a fifth aspect of embodiments of the present disclosure, a device for clearing garbage is provided. The device includes:
a processor; and
a memory for storing instructions executable by the processor;
wherein the processor is configured to perform:
acquiring monitored data of a monitored region;
detecting, according to the monitored data, whether garbage is present in the monitored region;
if garbage is present in the monitored region, acquiring location information of the garbage in the monitored region; and
sending the location information of the garbage to a garbage robot, the garbage robot being configured to clear the garbage according to the location information.

According to a sixth aspect of embodiments of the present disclosure, a device for clearing garbage is provided. The device includes:
a processor; and
a memory for storing instructions executable by the processor;
wherein the processor is configured to perform:
receiving location information of garbage sent by a monitoring apparatus; and
clearing the garbage according to the location information.

According to a seventh aspect of the embodiments of the present disclosure, there is provided a computer program, which when executing on a processor, performs the method of the first aspect of the embodiments of the present disclosure.

According to an eighth aspect of the embodiments of the present disclosure, there is provided a computer program, which when executing on a processor, performs the method of the second aspect of the embodiments of the present disclosure.

The technical solutions provided in the embodiments of the present disclosure may achieve the following beneficial effects.

Monitored data of a monitored region is acquired; it is detected, according to the monitored data, whether garbage is present in the monitored region; if garbage is present in the monitored region, location information of the garbage in the monitored region is acquired; and the location information of the garbage is sent to a garbage robot, wherein the garbage robot is configured to clear the garbage according to the location information. This solves the problem that the clearing efficiency of the garbage robot is low, and achieves the effects of timely clearing the garbage and precisely clearing the garbage according to the location information.

It shall be appreciated that the above general description and the detailed description hereinafter are only illustrative and interpretative but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
Fig. 1 is a schematic structural diagram illustrating an implementation environment involved in a method for clearing garbage according to an embodiment of the present disclosure;
Fig. 2 is a flowchart illustrating a method for clearing garbage according to an exemplary embodiment of the present disclosure;
Fig. 3 is a flowchart illustrating a method for clearing garbage according to another exemplary embodiment of the present disclosure;
Fig. 4A is a flowchart illustrating a method for clearing garbage according to another exemplary embodiment of the present disclosure;
Fig. 4B is a schematic diagram of a scenario involved in a method for clearing garbage according to an embodiment illustrated in Fig. 4A;
Fig. 4C is a schematic diagram of a scenario involved in a method for clearing garbage according to an embodiment illustrated in Fig. 4A;
Fig. 4D is a flowchart illustrating step 404 in a method for clearing garbage according to an embodiment illustrated in Fig. 4A;
Fig. 5A is a flowchart illustrating a method for clearing garbage according to another exemplary embodiment of the present disclosure;
Fig. 5B is a schematic diagram of a scenario involved in a method for clearing garbage according to an embodiment illustrated in Fig. 5A;
Fig. 6A is a flowchart illustrating a method for clearing garbage according to another exemplary embodiment of the present disclosure;
Fig. 6B is a schematic diagram of a scenario involved in a method for clearing garbage according to an embodiment illustrated in Fig. 6A;
Fig. 7 is a block diagram illustrating a device for clearing garbage according to an exemplary embodiment of the present disclosure;
Fig. 8 is a block diagram illustrating a device for clearing garbage according to another exemplary embodiment of the present disclosure;
Fig. 9 is a block diagram illustrating a device for clearing garbage according to an exemplary embodiment of the present disclosure;
Fig. 10 is a block diagram illustrating a device for clearing garbage according to an exemplary embodiment of the present disclosure; and
Fig. 11 is a block diagram illustrating a device for clearing garbage according to another exemplary embodiment of the present disclosure.

Through the above accompany drawings, the specific embodiments of the present disclosure have been shown, for which a more detailed description will be given as below. These drawings and textual description are not intended to limit the scope of the concept of the present disclosure in any manner, but to explain the concept of the present disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

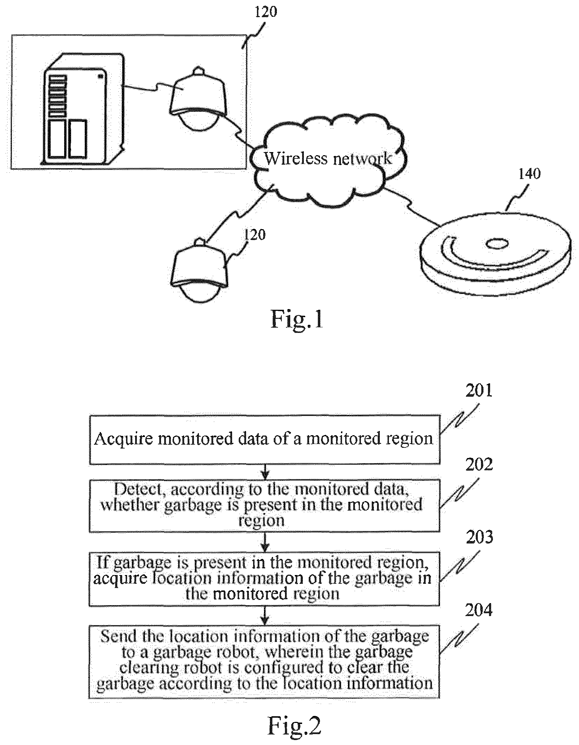

Fig. 1 is a schematic structural diagram illustrating an implementation environment involved in a method for clearing garbage according to an embodiment of the present disclosure; The implementation environment may include a monitoring apparatus 120, and a garbage robot 140.

The monitoring apparatus 120 may be a monitoring camera having calculating capabilities. The monitoring apparatus 120 may also be a combination of electronic devices having calculating capabilities and a general monitoring camera. The electronic devices having calculating capabilities may be a smart phone, a tablet computer, a personal computer, a server, or the like.

The monitoring apparatus 120 may communicate with the garbage robot 140 via wireless signals. The wireless signals may be any one of Bluetooth signals, infrared signals, wireless fidelity (WiFi) signals, and acoustic signals.

The garbage robot 140 is a robot capable of clearing garbage. The garbage robot 140 may be a sweeping robot, a vacuuming robot, a mopping robot, or the like.

Fig. 2 is a flowchart illustrating a method for clearing garbage according to an exemplary embodiment of the present disclosure. In the present embodiment, the method for clearing garbage is applied to, for example, a monitoring apparatus illustrated in Fig. 1. The method for clearing garbage may include the following steps:

In step 201, monitored data of a monitored region is acquired.

In step 202, it is detected whether garbage is present in the monitored region according to the monitored data.

In step 203, if garbage is present in the monitored region, location information of the garbage in the monitored region is acquired.

In step 204, the location information of the garbage is sent to a garbage robot, wherein the garbage clearing robot is configured to clear the garbage according to the location information.

Accordingly, in the method for clearing garbage provided in this embodiment, monitored data of a monitored region is acquired; it is detected, according to the monitored data, whether garbage is present in the monitored region; if garbage is present in the monitored region, location information of the garbage in the monitored region is acquired; and the location information of the garbage is sent to a garbage robot, wherein the garbage robot is configured to clear the garbage according to the location information. This solves the problem that the clearing efficiency of the garbage robot is low, and achieves the effects of timely clearing the garbage and precisely clearing the garbage according to the location information.

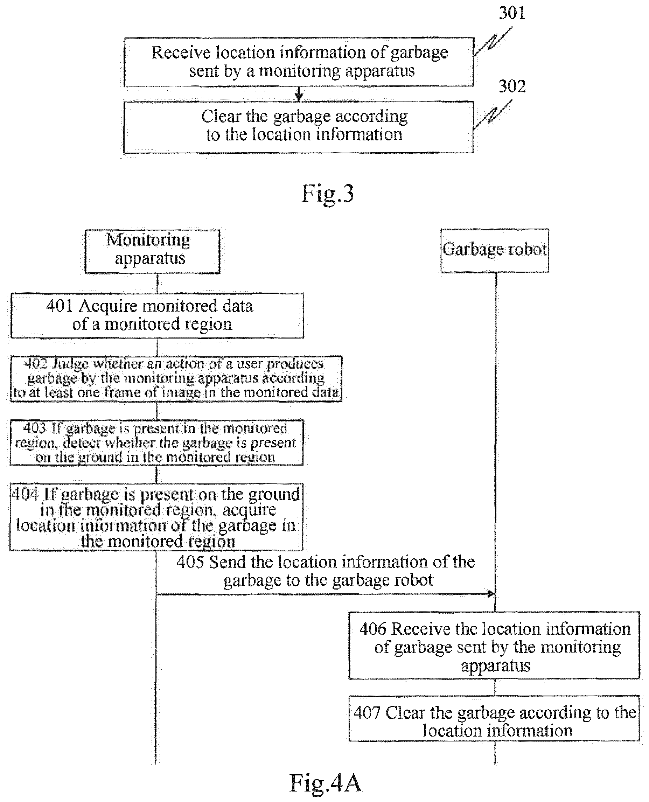

Fig. 3 is a flowchart illustrating a method for clearing garbage according to another exemplary embodiment of the present disclosure. In the present embodiment, the method for clearing garbage is applied to, for example, a garbage robot illustrated in Fig. 1. The method for clearing garbage may include the following steps:

In step 301, location information of garbage sent by a monitoring apparatus is received.

Acquiring monitored data of a monitored region by the monitoring apparatus; detecting, according to the monitored data, whether garbage is present in the monitored region; if garbage is present in the monitored region, the location information of the garbage is information acquired and sent to a garbage robot.

In step 302, the garbage is cleared according to the location information.

Accordingly, in the method for clearing garbage provided in this embodiment, the garbage robot receives location information of garbage sent by the monitoring apparatus, and clears the garbage according to the location information. This solves the problem that the clearing efficiency of the garbage robot is low, and achieves the effects of timely clearing the garbage and precisely clearing the garbage according to the location information.

Fig. 4A is a flowchart illustrating a method for clearing garbage according to another exemplary embodiment of the present disclosure. In the present embodiment, the method for clearing garbage is applied to, for example, an implementation environment illustrated in Fig. 1. The method for clearing garbage may include the following steps:

In step 401, a monitoring apparatus acquires monitored data of a monitored region.

The monitored data may be an image or a video.

When the monitoring apparatus is a monitoring camera, the image or video in the monitored region is picked up by the monitoring camera.

When the monitoring apparatus is a combination of electronic devices having calculating capabilities and a monitoring camera, the image or video in the monitored region may be acquired by the electronic devices through the monitoring camera.

Wherein, the video may be considered as successive frames of images.

In step 402, the monitoring apparatus determines, according to at least one frame of image in the monitored data, whether an action of a user produces garbage.

Since garbage is mainly produced by an action of a user, the monitoring apparatus may determine whether an action of a user produces garbage according to at least one frame of image.

As an exemplary implementation, the step may include the following sub-steps:

Firstly, the monitoring apparatus identifies whether an action of a user exists in at least one frame of image.

The at least one frame of image may be at least one of successive frames of images in a monitored video. The at least one frame of image may also be at least one frame of image collected at a predetermined interval, for example, an image collected every one second.

Secondly, if a user action exists, the monitoring apparatus detects whether a moving object corresponding to the action is present. The existence of a user action may be detected, for example, using motion detection by comparing subsequent images taken by the monitoring apparatus to detect one or more user movements.

Thirdly, if a moving object corresponding to the action is present, the monitoring apparatus identifies whether the moving object is garbage according to a preset garbage feature library. For example, the identification may be performed using image recognition software to compare the object captured in an image collected by the monitoring apparatus with a feature library containing images of objects deemed to be garbage. The images of the feature library may be compared with the object image to identify a match based upon one or more image characteristics.

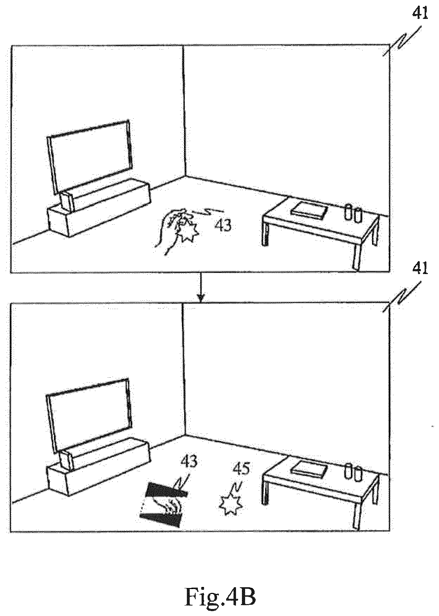

For example, as illustrated in Fig. 4B, the monitoring apparatus may identify that a user produces a hand-waving action according to at least one frame of image 41. The monitoring apparatus may further identify that a moving object 45 corresponding to the hand-waving action 43 is present in the at least one frame of image 41. Subsequently, the monitoring apparatus identifies that the moving object 45 is waste paper according to the preset garbage feature library. Then it is determined that garbage is present in the monitored region.

In step 403, if garbage is present in the monitored region, the monitoring apparatus detects whether the garbage is present on the ground in the monitored region.

Since generally a garbage robot is only capable of processing garbage on the ground, the monitoring apparatus may optionally detect whether the garbage is present on the ground in the monitored region.

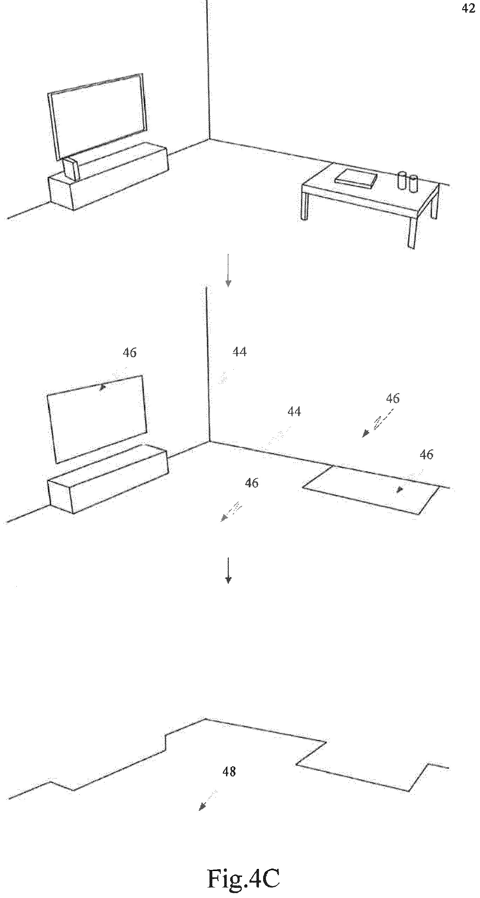

As an exemplary implementation, as illustrated in Fig. 4C, the monitoring apparatus may collect in advance an image 42 in which no moving object is present. Subsequently, the monitoring apparatus identifies various edge lines 44 in the image 42 through an edge detection algorithm, and partitions the image 42 into at least one region 46 according to the various edge lines 44. Finally, the monitoring apparatus identifies a ground region 48 in the at least one region 46 according to a preset ground feature library or user's manual setting operations.

The monitoring apparatus may detect whether the garbage is present in the ground region 48.

In step 404, if garbage is present on the ground in the monitored region, the monitoring apparatus acquires location information of the garbage in the monitored region.

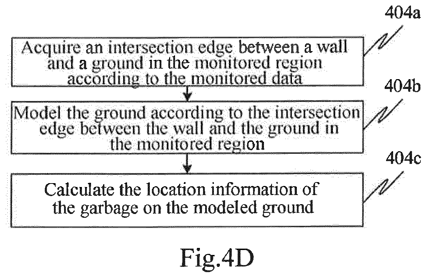

As an exemplary implementation, the step may include the following sub-steps as illustrated in Fig. 4D.

In sub-step 404a, an intersection edge between a wall and a ground in the monitored region is acquired according to the monitored data.

The monitoring apparatus acquires the intersection edge between the wall and the ground in the monitored region through the edge detection algorithm. Optionally, the monitoring apparatus may also acquire the intersection edge between walls in the monitored region through the edge detection algorithm.

In sub-step 404b, the ground is modeled according to the intersection edge between the wall and the ground in the monitored region.

The monitoring apparatus models the ground in three dimensions according to the intersection edge between the wall and the ground and the intersection edge between the walls. Since an included angle inside a house is generally a right angle, the monitoring apparatus may model the ground in the monitored region according to the included angles between different intersection edges and based on perspective principle. When a static object such as furniture or a household electrical appliance in the monitored region is recognized as, using image recognition, as an object in a preset object library, the monitoring apparatus may also acquire the practical dimension of the ground by conversion according to the practical dimension of the static object and the picture dimension in the image.

In sub-step 404c, the location information of the garbage on the modeled ground is calculated.

Subsequently, the monitoring apparatus calculates the location information of the garbage on the modeled ground.

It should be noted that sub-step 404a and sub-step 404b are not performed in a limited timing, and may be performed in an initially set time or in any idle time.

In step 405, the monitoring apparatus sends the location information of the garbage to the garbage robot.

The monitoring apparatus may instantly send the location information of the garbage to the garbage robot.

The monitoring apparatus may also send the location information of the garbage to the garbage robot when no moving object is present in the monitored region. When no moving object is present in the monitored region, it generally means that the user has left the region, and the clearing operation of the garbage robot may not affect the user.

In step 406, the garbage robot receives the location information of garbage sent by the monitoring apparatus.

In step 407, the garbage robot clears the garbage according to the location information.

The garbage robot moves to the ground region corresponding to the location information, and then clears the garbage in the ground region.

Accordingly, in the method for clearing garbage provided in this embodiment, monitored data of a monitored region is acquired; it is detected, according to the monitored data, whether garbage is present in the monitored region; if garbage is present in the monitored region, location information of the garbage in the monitored region is acquired; and the location information of the garbage is sent to a garbage robot, wherein the garbage robot is configured to clear the garbage according to the location information. This solves the problem that the clearing efficiency of the garbage robot is low, and achieves the effects of timely clearing the garbage and precisely clearing the garbage according to the location information.

Further, according to the method for clearing garbage provided in this embodiment, it is determined, according to at least one frame of image, whether an action of a user produces garbage; and such garbage determining mechanism may be triggered only when a user action exists in the monitored data. This improves the garbage determining efficiency of the monitoring apparatus, and reduces unnecessary workload.

Moreover, according to the method for clearing garbage provided in this embodiment, an intersection edge between a wall and a ground in a monitored region is acquired according to monitored data, and the ground is modeled according to various intersection edges in the monitored region. In this way, location information of garbage in the monitored region may be accurately calculated.

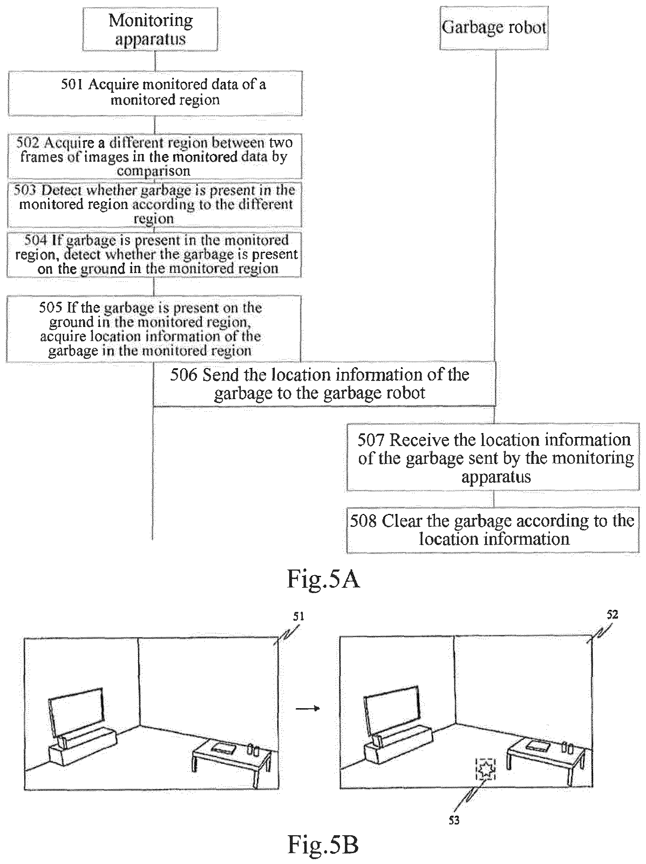

Fig. 5A is a flowchart illustrating a method for clearing garbage according to another exemplary embodiment of the present disclosure. In the present embodiment, the method for clearing garbage is applied in, for example, an implementation environment illustrated in Fig. 1. The method for clearing garbage may include the following steps:

In step 501, a monitoring apparatus acquires monitored data of a monitored region.

The monitored data may be an image or a video.

When the monitoring apparatus is a monitoring camera, the image or video in the monitored region is picked up by the monitoring camera.

When the monitoring apparatus is a combination of electronic devices having calculating capabilities and a monitoring camera, the image or video in the monitored region may be acquired by the electronic devices through the monitoring camera.

The video may be considered as successive frames of images.

In step 502, the monitoring apparatus acquires a different region between two frames of images in the monitored data by comparison.

Firstly, the monitoring apparatus extracts two frames of images from the monitored data.

The two frames of images may be two adjacent frames of images in a video, for example, an n^{th} frame of image and an n+1^{th} frame of image.

The two frames of images may also be two adjacent frames of images that are collected at a predetermined interval, for example, image at a t^{th} second and image at a t+5^{th} second in every 5 seconds.

One frame of image in the two frames of images is a background image with no moving object, and the other frame of image is a most recent image in the monitored data. The background image with no moving object may be a background image acquired by the monitoring apparatus when the user is out of home and after the garbage robot performs overall clearing.

The monitoring apparatus acquires a different region between the two frames of images by comparison.

Referring to Fig. 5B, an image 51 is a background image with no moving object, an image 52 is a most recent image in the monitored data, and the monitoring apparatus acquires a different region 53 between the two frames of images by comparison.

In step 503, the monitoring apparatus detects whether garbage is present in the monitored region according to the different region.

After the monitoring apparatus detects the different region, for a frame of image monitored at a later moment among the two frames of images, the monitoring apparatus identifies whether garbage is present in the different region in the image according to a preset garbage feature library.

In step 504, if garbage is present in the monitored region, the monitoring apparatus detects whether the garbage is present on the ground in the monitored region.

Since generally a garbage robot is only capable of processing garbage on the ground, the monitoring apparatus may optionally detect whether the garbage is present on the ground in the monitored region. The detection process may be referred to step 403.

It should be noted that an alternative implementation of step 503 and step 504 is as follows: the monitoring apparatus detects whether the different region overlaps the ground region in the monitored region; and if it overlaps, the monitoring apparatus performs the step of identifying whether garbage is present in the different region in the image according to the preset garbage feature library.

In step 505, if the garbage is present on the ground in the monitored region, the monitoring apparatus acquires location information of the garbage in the monitored region.

The acquiring the location information of the garbage by the monitoring apparatus may be referred to step 404.

In step 506, the monitoring apparatus sends the location information of the garbage to a garbage robot.

The monitoring apparatus may instantly send the location information of the garbage to the garbage robot.

The monitoring apparatus may also send the location information of the garbage to the garbage robot when no moving object is present in the monitored region. When no moving object is present in the monitored region, it generally means that the user has left the region, and the clearing operation of the garbage robot may not affect the user.

In step 507, the garbage robot receives the location information of the garbage sent by the monitoring apparatus.

In step 508, the garbage robot clears the garbage according to the location information.

The garbage robot moves to the ground region corresponding to the location information, and then clears the garbage in the ground region.

Accordingly, in the method for clearing garbage provided in this embodiment, monitored data of a monitored region is acquired; it is detected, according to the monitored data, whether garbage is present in the monitored region; if garbage is present in the monitored region, location information of the garbage in the monitored region is acquired; and the location information of the garbage is sent to a garbage robot, wherein the garbage robot is configured to clear the garbage according to the location information. This solves the problem that the clearing efficiency of the garbage robot is low, and achieves the effects of timely clearing the garbage and precisely clearing the garbage according to the location information.

Further, according to the method for clearing garbage provided in this embodiment, it is detected whether garbage is present by acquiring by comparison a different region between two frames of images in monitored data. The calculation workload is light and the calculation speed is high, therefore the solution may be implemented on a monitoring apparatus with a poor calculation capability, and thus has a strong applicability.

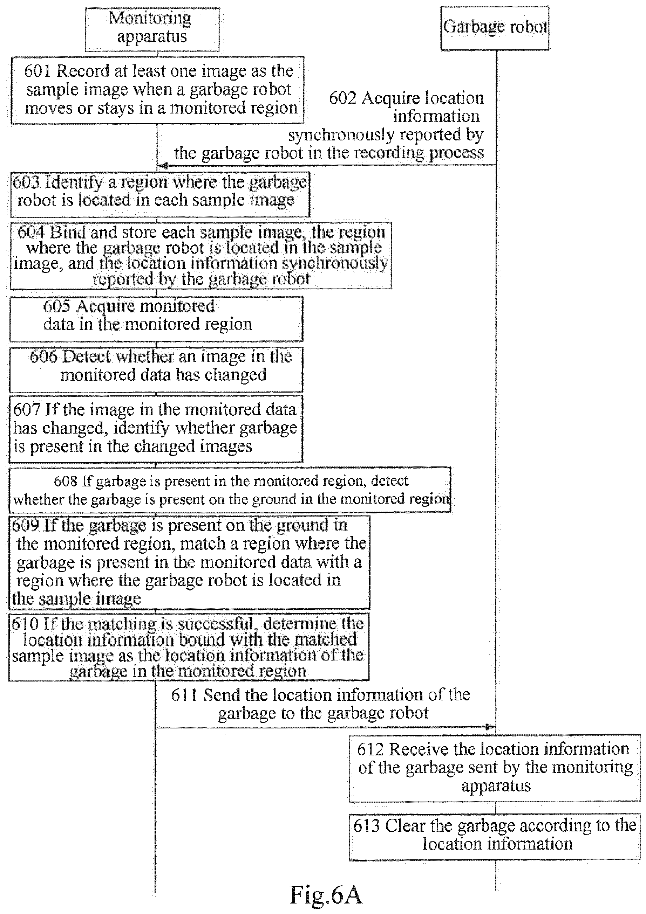

Fig. 6A is a flowchart illustrating a method for clearing garbage according to another exemplary embodiment of the present disclosure. In the present embodiment, the method for clearing garbage is applied in, for example, an implementation environment illustrated in Fig. 1. The method for clearing garbage may include the following steps:

In step 601, a monitoring apparatus records at least one image as the sample image when a garbage robot moves or stays in a monitored region.

Some garbage robots may generate by themselves location information of the ground. For example, the garbage robot employs the multi-point matrix positioning technology to express the location information of the ground using matrix coordinates. The monitoring apparatus may utilize the location information generated by the garbage robot itself.

As an exemplary implementation, when the garbage robot is in a clearing operation state, the monitoring apparatus records at least one image as the sample image when the garbage robot moves or stays in the monitored region. For example, when the garbage robot starts operating, a start signal is sent to the monitoring apparatus; and upon receiving the start signal, the monitoring apparatus takes at least one image in the monitored data as the sample image.

In step 602, the monitoring apparatus receives location information synchronously reported by the garbage robot in the recording process.

In this process, the garbage robot may synchronously report its location information. A piece of exemplary location information includes "report time: hour xx minute xx second xx on month xx day xx year xx: location information: matrix coordinates (x, y)".

Correspondingly, the monitoring apparatus receives the location information synchronously reported by the garbage robot in the recording process.

In step 603, the monitoring apparatus identifies a region where the garbage robot is located in each sample image.

Top cover features of the garbage robot may be preset in the monitoring apparatus, and the region where the garbage robot is located in the sample image may be identified according to the top cover features of the garbage robot.

In step 604, the monitoring apparatus bind and stores each sample image, the region where the garbage robot is located in the sample image, and the location information synchronously reported by the garbage robot.

Table 1 exemplarily lists a binding relationship stored in the monitoring apparatus.

**Table 1**

| | | |
|---|---|---|
| Sample image | Region where garbage robot is present in sample image | Location information on the ground |
| Sample image 1 | Upper left pixel 1, upper right pixel 1, lower left pixel 1, lower right pixel 1 | Matrix coordinates (x1, y1) |
| Sample image 2 | Upper left pixel 2, upper right pixel 2, lower left pixel 2, lower right pixel 2 | Matrix coordinates (x2, y2) |
| Sample image 3 | Upper left pixel 3, upper right pixel 3, lower left pixel 3, lower right pixel 3 | Matrix coordinates (x3, y3) |
| Sample image 4 | Upper left pixel 4, upper right pixel 4, lower left pixel 4, lower right pixel 4 | Matrix coordinates (x4, y4) |
| Sample image 5 | Upper left pixel 5, upper right pixel 5, lower left pixel 5, lower right pixel 5 | Matrix coordinates (x5, y5) |

In step 605, the monitored data in the monitored region is acquired by the monitoring apparatus.

In a normal monitoring process, the monitoring apparatus acquires the monitored data in the monitored region, wherein the monitored data may be an image or a video.

When the monitoring apparatus is a monitoring camera, the image or video in the monitored region is picked up by the monitoring camera.

When the monitoring apparatus is a combination of electronic devices having calculating capabilities and a monitoring camera, the image or video in the monitored region may be acquired by the electronic devices through the monitoring camera.

The video may be considered as successive frames of images.

In step 606, the monitoring apparatus detects whether an image in the monitored data has changed.

The monitoring apparatus may detect whether changes take place between two adjacent frames of images.

Alternatively, the monitoring apparatus detects whether the image in the monitored data changes as compared against a background image with no moving object. The background image with no moving object may be a background image acquired by the monitoring apparatus when the user is out of home and after the garbage robot completes overall clearing operation.

In step 607, if the image in the monitored data has changed, the monitoring apparatus identifies whether garbage is present in the changed images.

The monitoring apparatus identifies whether garbage is present in the changed image according to a preset garbage feature library.

In step 608, if garbage is present in the monitored region, the monitoring apparatus detects whether the garbage is present on the ground in the monitored region.

Since generally a garbage robot is only capable of processing garbage on the ground, the monitoring apparatus may optionally detect whether the garbage is present on the ground in the monitored region. The detection process may be referred to step 403.

It should be noted that an alternative implementation of steps 606 to 608 is as follows: the monitoring apparatus detects whether the ground region in the image of the monitored data has changed; and if the ground region has changed, the monitoring apparatus performs the step of identifying whether garbage is present in the changed image.

In step 609, if the garbage is present on the ground in the monitored region, the monitoring apparatus matches a region where the garbage is present in the monitored data with a region where the garbage robot is located in the sample image.

The sample image is an image recorded in advance by the monitoring apparatus when the garbage robot moves or stays in the monitored region, and each sample image is bound with the location information synchronously reported by the garbage robot.

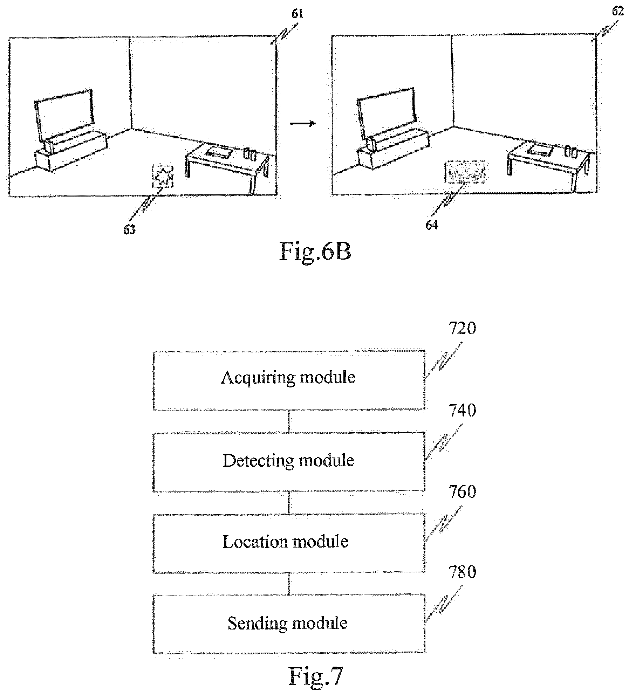

As illustrated in Fig. 6B, the monitoring apparatus matches a region 63 where the garbage is located in monitored data 61 with a region 64 where the garbage robot is located in a sample image 62. A successful matching means that an overlapping degree of two regions exceeds a predetermined threshold. The sample image 62 in Fig. 6B may be the sample image 1 listed in Table 1.

In step 610, if the matching is successful, the monitoring apparatus determines the location information bound with the matched sample image as the location information of the garbage in the monitored region.

Assuming that the region 63 matches with the region 64 where the garbage robot is located, and the region 64 where the garbage robot is located is the sample image 1 listed in Table 1, then the monitoring apparatus determines the matrix coordinates (x1, y1) as the location information of the garbage in the monitored region.

In step 611, the monitoring apparatus sends the location information of the garbage to the garbage robot.

The monitoring apparatus may instantly send the location information of the garbage to the garbage robot.

The monitoring apparatus may also send the location information of the garbage to the garbage robot when no moving object is present in the monitored region. When no moving object is present in the monitored region, it generally means that the user has left the region, and the clearing operation of the garbage robot may not affect the user.

In step 612, the garbage robot receives the location information of the garbage sent by the monitoring apparatus.

In step 613, the garbage robot clears the garbage according to the location information.

The garbage robot moves to the ground region corresponding to the location information, and then clears the garbage in the ground region.

Accordingly, in the method for clearing garbage provided in this embodiment, monitored data of a monitored region is acquired; it is detected, according to the monitored data, whether garbage is present in the monitored region; if garbage is present in the monitored region, location information of the garbage in the monitored region is acquired; and the location information of the garbage is sent to a garbage robot, wherein the garbage robot is configured to clear the garbage according to the location information. This solves the problem that the clearing efficiency of the garbage robot is low, and achieves the effects of timely clearing the garbage and precisely clearing the garbage according to the location information.

Further, according to the method for clearing garbage provided in this embodiment, the monitoring apparatus acquires location information of garbage according to location information generated by the garbage robot itself. This reduces the workload for calculating location information of garbage produced by the monitoring apparatus, and lowers the requirements on the calculation capability of the monitoring apparatus.

It should be further noted that Figs. 4A, 5A and 6A respectively illustrate three different methods to detect whether garbage is present in a monitored region according to monitored data. Figs. 4A and 6A further respectively illustrate two different methods to acquire location information of garbage in a monitored region. The three different detecting methods and two different acquiring methods may be combined in any manner to form six different embodiments. These embodiments may be readily envisaged by a person skilled in the art based on the embodiments illustrated in Figs. 4A, 5A and 6A, and will not be repeated in the present disclosure.

Device embodiments of the present disclosure are described hereinafter, wherein the devices may be used to perform the method embodiments. Details that are not disclosed in the device embodiments of the present disclosure, reference may be made to the method embodiments of the present disclosure.

Fig. 7 is a block diagram illustrating a device for clearing garbage according to an exemplary embodiment of the present disclosure. The device for clearing garbage may be implemented with software, hardware or a combination of software and hardware as all or a part of a monitoring apparatus. The device for clearing garbage may include:
an acquiring model 720, configured to acquire monitored data of a monitored region;
a detecting model 740, configured to detect, according to the monitored data, whether garbage is present in the monitored region;
a location model 760, configured to acquire location information of the garbage in the monitored region if garbage is present in the monitored region; and
a sending module 780, configured to send the location information of the garbage to a garbage robot, wherein the garbage robot is configured to clear the garbage according to the location information.

Accordingly, in the device for clearing garbage provided in this embodiment, monitored data of a monitored region is acquired; it is detected, according to the monitored data, whether garbage is present in the monitored region; if garbage is present in the monitored region, location information of the garbage in the monitored region is acquired; and the location information of the garbage is sent to a garbage robot, wherein the garbage robot is configured to clear the garbage according to the location information. This solves the problem that the clearing efficiency of the garbage robot is low, and achieves the effects of timely clearing the garbage and precisely clearing the garbage according to the location information.

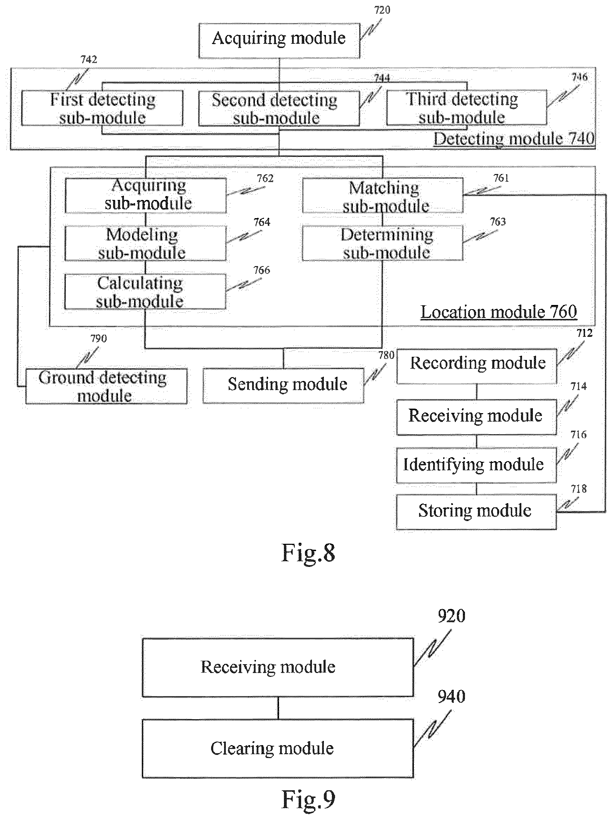

Fig. 8 is a block diagram illustrating a device for clearing garbage according to an exemplary embodiment of the present disclosure. The device for clearing garbage may be implemented with software, hardware or a combination of software and hardware as all or a part of a monitoring apparatus. The device for clearing garbage may include:
an acquiring module 720, configured to acquire monitored data of a monitored region;
a detecting module 740, configured to detect, according to the monitored data, whether garbage is present in the monitored region;
a location module 760, configured to, if garbage is present in the monitored region, acquire location information of the garbage in the monitored region; and
a sending module 780, configured to send the location information of the garbage to a garbage robot, wherein the garbage robot is configured to clear the garbage according to the location information.

Optionally, the detecting module 740 includes:
a first detecting sub-module 742, configured to determine, according to at least one frame of image in the monitored data, whether an action of a user produces garbage; ora second detecting sub-module 744, configured to acquire a different region between two frames of images in the monitored data by comparison, and detect, according to the different region, whether garbage is present in the monitored region; ora third detecting sub-module 746, configured to detect whether a region with a changed background is present in the monitored data; and if the region with a changed background is present, detect whether garbage is present in the monitored region according to changed region.

Optionally, the location module 760 includes:
an acquiring sub-module 762, configured to acquire an intersection edge between a wall and a ground in the monitored region according to the monitored data;
a modeling sub-module 764, configured to model the ground according to the intersection edge between the wall and the ground in the monitored region; anda calculating sub-module 766, configured to calculate location information of the garbage on the modeled ground. Optionally, the location module 760 includes:
a matching sub-module 761, configured to match a garbage region where the garbage is located in the monitored data with a region where the garbage robot is located in at least one sample image, the sample image being an image previously recorded by a monitoring apparatus when the garbage robot moves or stays in the monitored region, and each sample image being bound with location information synchronously reported by the garbage robot; and a determining sub-module 763, configured to determine, if the matching is successful, the location information bound with the matched sample image as the location information of the garbage in the monitored region. Optionally, the device further includes:
a recording module 712, configured to record at least one image as the sample image when the garbage robot moves or stays in the monitored region; a receiving module 714, configured to receive location information synchronously reported by the garbage robot in the recording process;an identifying module 716, configured to identify a region where the garbage robot is located in each sample image; anda storing module 718, configured to bind and store each sample image, the region where the garbage robot is located in the sample image, and the location information synchronously reported by the garbage robot. Optionally, the device further includes:
a ground detecting module 790, configured to detect whether the garbage is present on the ground in the monitored region; and the location module 760 is configured to, if the garbage is present on the ground in the monitored region, perform the step of acquiring location information of the garbage in the monitored region.

Accordingly, in the device for clearing garbage provided in this embodiment, monitored data of a monitored region is acquired; it is detected, according to the monitored data, whether garbage is present in the monitored region; if garbage is present in the monitored region, location information of the garbage in the monitored region is acquired; and the location information of the garbage is sent to a garbage robot, wherein the garbage robot is configured to clear the garbage according to the location information. This solves the problem that the clearing efficiency of the garbage robot is low, and achieves the effects of timely clearing the garbage and precisely clearing the garbage according to the location information.

Further, according to the device for clearing garbage provided in this embodiment, an intersection edge between a wall and a ground in a monitored region is acquired according to monitored data, and the ground is modeled according to the intersection edge between the wall and the ground in the monitored region. In this way, location information of garbage in the monitored region may be accurately calculated.

Moreover, according to the device for clearing garbage provided in this embodiment, it is detected whether garbage is present by acquiring a different region between two frames of images in the monitored data by comparison. The calculation workload is less and the calculation speed is high, therefore the solution may be implemented on a monitoring apparatus with a poor calculation capability, and has a strong applicability.

According to the device for clearing garbage provided in this embodiment, the monitoring apparatus acquires location information of garbage according to location information generated by the garbage robot. This reduces the workload for calculating location information of garbage produced by the monitoring apparatus, and lowers the requirements on the calculation capability of the monitoring apparatus.

Fig. 9 is a block diagram illustrating a device for clearing garbage according to an exemplary embodiment of the present disclosure. The device for clearing garbage may be implemented with software, hardware or a combination of software and hardware as all or a part of a garbage robot. The device for clearing garbage may include:
a receiving module 920, configured to receive location information of garbage sent by a monitoring apparatus. Acquiring monitored data of a monitored region by the monitoring apparatus; detecting, according to the monitored data, whether garbage is present in the monitored region; if garbage is present in the monitored region, the location information of the garbage is information acquired and sent to a garbage robot.
a clearing module 940, configured to clear the garbage according to the location information.

Accordingly, in the device for clearing garbage provided in this embodiment, the garbage robot receives location information of garbage sent by the monitoring apparatus, and clears the garbage according to the location information. This solves the problem that the clearing efficiency of the garbage robot is low, and achieves the effects of timely clearing the garbage and precisely clearing the garbage according to the location information.

With respect to the devices in the above embodiments, the specific implementations of operations executed by various modules thereof have been described in detail in the embodiments illustrating the methods, which are not described herein any further.

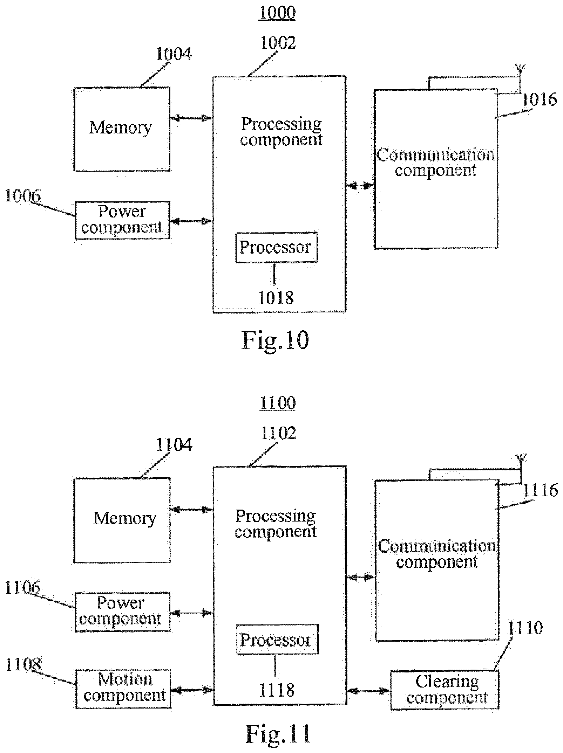

Fig. 10 is a block diagram illustrating a device for clearing garbage 1000 according to an exemplary embodiment of the present disclosure. For example, the device 1000 may be a monitoring camera, a combination of a monitoring camera and a server, or a combination of a monitoring camera and a mobile terminal.

Referring to Fig. 10, the device 1000 may include one or more of: a processing component 1002, a memory 1004, a power component 1006, and a communication component 1016.

The processing component 1002 generally controls overall operations of the device 1000, including such operations as address resolution, data reception and transmission traffic control, and the like. The processing component 1002 may include one or more processors 1018 to execute instructions to perform all or a part of the steps in the above-described methods. In addition, the processing component 1002 may include one or more modules which facilitate the interaction between the processing component 1002 and other components.

The memory 1004 is configured to store various types of data to support the operations of the device 1000. Examples of such data include instructions for performing any application or method on the device 1000, user data and the like. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The memory 1004 further stores one or more modules, wherein the one or more modules are configured to be run by one or more processors 1018, to implement all or a part of the steps in the above method for clearing garbage.

The power component 1006 provides power to various components of the device 1000. The power component 1006 may include a power management system, one or more power supplies, and other components associated with the generation, management, and distribution of power in the device 1000.

The communication component 1016 is configured to facilitate wired or wireless communications between the device 1000 and other devices. The device 1000 may establish a communication standard-based wireless network, for example, a WiFi network. In an exemplary embodiment, the communication component 1016 externally transmits a broadcast signal or broadcast associated information via a broadcast channel.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 1004, executable by the processor 1018 in the device 1000, for performing the above-described method for clearing garbage. For example, the non-transitory computer-readable storage medium may be a ROM, a random access memory (RAM), a compact disc read-only memory (CD-ROM), a magnetic tape, a floppy disc, an optical data storage device, or the like.

Fig. 11 is a block diagram illustrating a device for clearing garbage 1100 according to an exemplary embodiment of the present disclosure. For example, the device 1100 may be a sweeping robot, a mopping robot, or the like.

Referring to Fig. 11, the device 1100 may include one or more of: a processing component 1102, a memory 1104, a power component 1106, a motion component 1108, a clearing component 1110, and a communication component 1116.

The processing component 1102 generally controls overall operations of the device 1100, including such operations as address resolution, data reception and transmission, traffic control, and the like. The processing component 1102 may include one or more processors 1118 to execute instructions to perform all or a part of the steps in the above-described methods. In addition, the processing component 1102 may include one or more modules which facilitate the interaction between the processing component 1102 and other components.

The memory 1104 is configured to store various types of data to support the operations of the device 1100. Examples of such data include instructions for performing any application or method on the device 1100, user data and the like. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The memory 1104 further stores one or more modules, wherein the one or more modules are configured to be run by one or more processors 1118, to implement all or a part of the steps in the above method for clearing garbage.

The power component 1106 provides power to various components of the device 1100. The power component 1106 may include a power management system, one or more power supplies, and other components associated with the generation, management, and distribution of power in the device 1100.

The motion component 1108 is a mechanical device for providing power for the device 1100. The motion component 1108 may be a wheel, a track, or a mechanical foot.

The clearing component 1110 is a mechanical device for clearing garbage. The clearing component 1110 may be a vacuum component, a sweeping component, a vacuum and sweeping component or a mopping component.

The communication component 1116 is configured to facilitate wired or wireless communications between the device 1100 and other devices. The device 1100 may establish a communication standard-based wireless network, for example, a WiFi network. In an exemplary embodiment, the communication component 1116 externally transmits a broadcast signal or broadcast associated information via a broadcast channel.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 1104, executable by the processor 1118 in the device 1100, for performing the above-described method for clearing garbage. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only.

It will be appreciated that the present disclosure is not limited to the exact construction that has been described above and illustrated in the accompanying drawings, and that various modifications and changes may be made without departing from the scope thereof. The scope of the present disclosure is only defined by the appended claims.

## Claims

1. A method for automatically clearing garbage, **characterized in that** the method comprises, at a monitoring apparatus:
acquiring (201) monitored data of a monitored region, the monitored data comprising at least one frame of image;
detecting (202), according to the monitored data, whether garbage is present in the monitored region;
if garbage is present in the monitored region, acquiring (203) location information of the garbage in the monitored region; and
sending (204) the location information of the garbage to a garbage robot, the garbage robot being configured to clear the garbage according to the location information, **characterized in that** the monitoring apparatus comprises a monitoring camera for capturing images or video; and
the step of detecting, according to the monitored data, whether garbage is present in the monitored region comprises:
identifying whether an action of a user exists in the at least one frame of image;
if a user action exists in the at least one frame of image, detecting whether a moving object corresponding to the action is present in the at least one frame of image; and
if a moving object corresponding to the action is present in the at least one frame of image, identifying whether the moving object is garbage according to a preset garbage feature library.

2. The method according to claim 1, wherein the step of identifying whether the moving object is garbage according to a preset garbage feature library, is performed using image recognition software to compare the object captured in an image collected by the monitoring apparatus with a feature library containing images of objects deemed to be garbage.

3. The method according to claim 1 or 2, wherein the acquiring location information of the garbage in the monitored region comprises:
acquiring (404a) an intersection edge between a wall and a ground in the monitored region according to the monitored data;
modeling (404b) the ground according to the intersection edge between the wall and the ground in the monitored region; and
calculating (404c) location information of the garbage on the modeled ground.

4. The method according to any preceding claim, wherein the acquiring location information of the garbage in the monitored region comprises:
matching a garbage region, where the garbage is located in the monitored data, with a region where the garbage robot is located, in at least one sample image, the sample image being an image previously recorded by a monitoring apparatus when the garbage robot moves or stays in the monitored region, and each sample image being bound with location information synchronously reported by the garbage robot; and
if the matching is successful, determining the location information bound with the matched sample image as the location information of the garbage in the monitored region.

5. The method according to claim 4, wherein the method further comprises:
recording at least one image as the sample image when the garbage robot moves or stays in the monitored region;
receiving location information synchronously reported by the garbage robot in the recording process;
identifying a region where the garbage robot is located in each sample image; and
binding and storing each sample image, the region where the garbage robot is located in the sample image, and the location information synchronously reported by the garbage robot.

6. The method according to any one of claims 1 to 5, wherein the method further comprises:
detecting whether the garbage is present on the ground in the monitored region; and
performing the step of acquiring location information of the garbage in the monitored region if the garbage is present on the ground in the monitored region.

7. A method for automatically clearing garbage, **characterized in that** the method comprises, at a garbage robot:
receiving (406, 507, 612) location information of garbage sent by a monitoring apparatus performing the method according to any of claims 1 to 6; and
clearing (407, 508, 613) the garbage according to the location information.

8. A device for clearing garbage, **characterized in that** the device comprises:
an acquiring module (720), configured to acquire monitored data of a monitored region, the monitored data comprising at least one frame of image;
a detecting module (740), configured to detect, according to the monitored data, whether garbage is present in the monitored region;
a location module (760), configured to, if garbage is present in the monitored region, acquire location information of the garbage in the monitored region; and
a sending module (780), configured to send the location information of the garbage to a garbage robot, the garbage robot being configured to clear the garbage according to the location information, **characterized in that** the detecting module (740) is configured to identify whether an action of a user exists in the at least one frame of image; and if a user action exists in the at least one frame of image, detect whether a moving object corresponding to the action is present in the at least one frame of image; and
wherein if a moving object corresponding to the action is present in the at least one frame of image, the detecting module (740) being configured to identify whether the moving object is garbage according to a preset garbage feature library.

9. The device according to claim 8, wherein the detecting module (740) is configured to identify whether the moving object is garbage according to a preset garbage feature library, using image recognition software to compare the object captured in an image collected by the monitoring apparatus with a feature library containing images of objects deemed to be garbage.

10. The device according to claim 8 or 9, wherein the location module comprises:
an acquiring sub-module (762), configured to acquire an intersection edge between a wall and a ground in the monitored region according to the monitored data;
a modeling sub-module (764), configured to model the ground according to the intersection edge between the wall and the ground in the monitored region; and
a calculating sub-module (766), configured to calculate location information of the garbage on the modeled ground.

11. A device for clearing garbage, **characterized in that** the device comprises:
a receiving module (920), configured to receive location information of garbage sent by a monitoring apparatus according to any of claims 8 to 10; and
a clearing module (940), configured to clear the garbage according to the location information.

12. A device for clearing garbage, **characterized in that** the device comprises:
a processor (1018); and
a memory (1004) for storing instructions executable by the processor;
wherein the processor is configured to perform the method of any of claims 1 to 6.

13. A device for clearing garbage, **characterized in that** the device comprises:
a processor (1118); and
a memory (1104) for storing instructions executable by the processor;
wherein the processor is configured to perform the method of claim 7.

14. A computer program which when executing on a processor of a monitoring apparatus causes it to perform the method according to any one of claims 1 to 6.

15. A computer program, which when executing on a processor of a device for clearing garbage, causes it to perform the method according to claim 7.

## Patentansprüche

1. Verfahren zum automatischen Beseitigen von Abfall, **dadurch gekennzeichnet, dass** das Verfahren in einer Überwachungsvorrichtung Folgendes umfasst:
Erfassen (201) von überwachten Daten einer überwachten Region, wobei die überwachten Daten wenigstens einen Bild-Frame umfassen;
Erkennen (202), gemäß den überwachten Daten, ob Abfall in der überwachten Region vorhanden ist;
Erfassen (203), wenn Abfall in der überwachten Region vorhanden ist, von Ortsinformationen über den Abfall in der überwachten Region; und
Senden (204) der Ortsinformationen über den Abfall zu einem Abfallroboter, wobei der Abfallroboter zum Beseitigen des Abfalls gemäß den Ortsinformationen konfiguriert ist, **dadurch gekennzeichnet, dass** die Überwachungsvorrichtung eine Überwachungskammer zum Aufnehmen von Bildern oder Video umfasst; und
der Schritt des Erkennens, gemäß den überwachten Daten, ob Abfall in der überwachten Region vorhanden ist, Folgendes beinhaltet:
Identifizieren, ob eine Aktion eines Benutzers in dem wenigstens einen Bild-Frame existiert;
Erkennen, wenn eine Benutzeraktion in dem wenigstens einen Bild-Frame existiert, ob ein bewegliches Objekt entsprechend der Aktion in dem wenigstens einen Bild-Frame vorhanden ist; und
Identifizieren, wenn ein bewegliches Objekt entsprechend der Aktion in dem wenigstens einen Bild-Frame vorhanden ist, ob das bewegliche Objekt Abfall ist, gemäß einer voreingestellten Abfallmerkmalsbibliothek.

2. Verfahren nach Anspruch 1, wobei der Schritt des Identifizierens, ob das bewegliche Objekt Abfall gemäß einer voreingestellten Abfallmerkmalsbibliothek ist, mittels einer Bilderkennungssoftware zum Vergleichen des Objekts, das in einem von der Überwachungsvorrichtung erfassten Bild aufgenommen wird, mit einer Merkmalsbibliothek durchgeführt wird, die Bilder von Objekten enthält, die als Abfall angesehen werden.

3. Verfahren nach Anspruch 1 oder 2, wobei das Erfassen von Ortsinformationen des Abfalls in der überwachten Region Folgendes beinhaltet:
Erfassen (404a) eines Schnittrandes zwischen einer Wand und einem Boden in der überwachten Region gemäß den überwachten Daten;
Modellieren (404b) des Bodens gemäß dem Schnittrand zwischen der Wand und dem Boden in der überwachten Region; und
Berechnen (404c) von Ortsinformationen über den Abfall auf dem modellierten Boden.

4. Verfahren nach einem vorherigen Anspruch, wobei das Erfassen von Ortsinformationen über den Abfall in der überwachten Region Folgendes beinhaltet:
Abgleichen einer Abfallregion, in der sich Abfall in den überwachten Daten befindet, mit einer Region, in der sich der Abfallroboter befindet, in wenigstens einem Sample-Bild, wobei das Sample-Bild ein zuvor von einer Überwachungsvorrichtung aufgezeichnetes Bild ist und wobei jedes Sample-Bild an Ortsinformationen gebunden ist, die synchron von dem Abfallroboter gemeldet werden; und
Bestimmen, wenn der Abgleich erfolgreich ist, der an das abgeglichene Sample-Bild gebundenen Ortsinformationen als die Ortsinformationen des Abfalls in der überwachten Region.

5. Verfahren nach Anspruch 4, wobei das Verfahren ferner Folgendes beinhaltet:
Aufzeichnen von wenigstens einem Bild als das Sample-Bild, wenn sich der Abfallroboter bewegt oder wenn er in der überwachten Region bleibt;
Empfangen von Ortsinformationen, die synchron von dem Abfallroboter in dem Aufzeichnungsprozess gemeldet wurden;
Identifizieren einer Region, in der sich der Abfallroboter in jedem Sample-Bild befindet; und
Binden und Speichern jedes Sample-Bildes, der Region, in der sich der Abfallroboter in dem Sample-Bild befindet, und der Ortsinformationen, die synchron von dem Abfallroboter gemeldet werden.

6. Verfahren nach einem der Ansprüche 1 bis 5, wobei das Verfahren ferner Folgendes beinhaltet:
Erkennen, ob der Abfall auf dem Boden in der überwachten Region vorhanden ist; und
Durchführen des Schritts des Erfassens von Ortsinformationen über den Abfall in der überwachten Region, wenn der Abfall auf dem Boden in der überwachten Region vorhanden ist.

7. Verfahren zum automatischen Beseitigen von Abfall, **dadurch gekennzeichnet, dass** das Verfahren an einem Abfallroboter Folgendes beinhaltet:
Empfangen (406, 507, 612) von von einer Überwachungsvorrichtung gesendeten Ortsinformationen über Abfall zum Durchführen des Verfahrens nach einem der Ansprüche 1 bis 6; und
Beseitigen (407, 508, 613) des Abfalls gemäß den Ortsinformationen.

8. Vorrichtung zum Beseitigen von Abfall, **dadurch gekennzeichnet, dass** die Vorrichtung Folgendes umfasst:
ein Erfassungsmodul (720), konfiguriert zum Erfassen von überwachten Daten einer überwachten Region, wobei die überwachten Daten wenigstens einen Bild-Frame umfassen;
ein Erkennungsmodul (740), konfiguriert zum Erkennen, gemäß den überwachten Daten, ob Abfall in der überwachten Region vorhanden ist;
ein Ortsmodul (760), konfiguriert zum Erfassen, wenn Abfall in der überwachten Region vorhanden ist, von Ortsinformationen über den Abfall in der überwachten Region; und
ein Sendemodul (780), konfiguriert zum Senden der Ortsinformationen über den Abfall zu einem Abfallroboter, wobei der Abfallroboter zum Beseitigen des Abfalls gemäß den Ortsinformationen konfiguriert ist, **dadurch gekennzeichnet, dass** das Erkennungsmodul (740) konfiguriert ist zum Identifizieren, ob eine Aktion eines Benutzers in dem wenigstens einen Bild-Frame existiert; und Erkennen, wenn eine Benutzeraktion in dem wenigstens einen Bild-Frame existiert, ob ein bewegliches Objekt entsprechend der Aktion in dem wenigstens einen Bild-Frame vorhanden ist; und
wobei, wenn ein bewegliches Objekt entsprechend der Aktion in dem wenigstens einen Bild-Frame vorhanden ist, das Erkennungsmodul (740) konfiguriert ist zum Identifizieren, ob das bewegliche Objekt Abfall gemäß einer voreingestellten Abfallmerkmalsbibliothek ist.

9. Vorrichtung nach Anspruch 8, wobei das Erkennungsmodul (740) zum Identifizieren konfiguriert ist, ob das bewegliche Objekt Abfall gemäß einer voreingestellten Abfallmerkmalsbibliothek ist, anhand von Bilderkennungssoftware zum Vergleichen des Objekts, aufgenommen in einem von der Überwachungsvorrichtung erfassten Bild, mit einer Bildbibliothek, die Bilder von Objekten enthält, die als Abfall angesehen werden.

10. Vorrichtung nach Anspruch 8 oder 9, wobei das Ortsmodul Folgendes umfasst:
ein Erfassungssubmodul (762), konfiguriert zum Erfassen eines Schnittrandes zwischen einer Wand und einem Boden in der überwachten Region gemäß den überwachten Daten;
ein Modellierungssubmodul (764), konfiguriert zum Modellieren des Bodens gemäß dem Schnittrand zwischen der Wand und dem Boden in der überwachten Region; und
ein Rechensubmodul (766), konfiguriert zum Berechnen von Ortsinformationen des Abfalls auf dem modellierten Boden.

11. Vorrichtung zum Beseitigen von Abfall, **dadurch gekennzeichnet, dass** die Vorrichtung Folgendes umfasst:
ein Empfangsmodul (920), konfiguriert zum Empfangen von Ortsinformationen über Abfall, gesendet von einer Überwachungsvorrichtung nach einem der Ansprüche 8 bis 10; und
ein Löschmodul (740), konfiguriert zum Löschen des Abfalls gemäß den Ortsinformationen.

12. Vorrichtung zum Beseitigen von Abfall, **dadurch gekennzeichnet, dass** die Vorrichtung Folgendes umfasst:
einen Prozessor (1018); und
einen Speicher (1004) zum Speichern von von dem Prozessor ausführbaren Befehlen,
wobei der Prozessor zum Durchführen des Verfahrens nach einem der Ansprüche 1 bis 6 konfiguriert ist.

13. Vorrichtung zum Beseitigen von Abfall, **dadurch gekennzeichnet, dass** die Vorrichtung Folgendes umfasst:
einen Prozessor (1118); und
einen Speicher (1104) zum Speichern von von dem Prozessor ausführbaren Befehlen;
wobei der Prozessor zum Durchführen des Verfahrens nach Anspruch 7 konfiguriert ist.

14. Computerprogramm, das bei Ausführung auf einem Prozessor einer Überwachungsvorrichtung die Durchführung des Verfahrens nach einem der Ansprüche 1 bis 6 bewirkt.

15. Computerprogramm, das bei Ausführung auf einem Prozessor einer Vorrichtung zum Beseitigen von Abfall die Durchführung des Verfahrens nach Anspruch 7 bewirkt.

## Revendications

1. Procédé d'élimination automatique d'ordures, **caractérisé en ce que** le procédé comprend, au niveau d'un appareil de contrôle :
l'acquisition (201) de données contrôlées d'une région contrôlée, les donnée contrôlées comprenant au moins une trame d'image ;
la détection (202), conformément aux données contrôlées, que des ordures se trouvent ou non dans la région contrôlée ;
si des ordures se trouvent dans la région contrôlée, l'acquisition (203) d'informations de position des ordures dans la région contrôlée ; et
l'envoi (204) des informations de position des ordures à un robot à ordures, le robot à ordures étant configuré pour éliminer les ordures conformément aux informations de position, **caractérisé en ce que** l'appareil de contrôle comporte une caméra de contrôle pour capturer des images ou une vidéo ; et
l'étape de détection, conformément aux données contrôlées, que des ordures se trouvent ou non dans la région contrôlée comprend :
l'identification qu'une action d'un utilisateur existe ou non dans l'au moins une trame d'image ;
si une action d'un utilisateur existe dans l'au moins une trame d'image, la détection qu'un objet mouvant correspondant à l'action est présent ou non dans l'au moins une trame d'image ; et
si un objet mouvant correspondant à l'action est présent dans l'au moins une trame d'image, l'identification que l'objet mouvant représente ou non des ordures conformément à une bibliothèque de caractéristiques d'ordures prédéfinies.

2. Procédé selon la revendication 1, dans lequel l'étape d'identification que l'objet mouvant représente ou non des ordures conformément à une bibliothèque de caractéristiques d'ordures prédéfinies est exécutée à l'aide d'un logiciel de reconnaissance d'image pour comparer l'objet capturé dans une image collectée par l'appareil de contrôle avec une bibliothèque de caractéristiques contenant des images d'objets jugés être des ordures.

3. Procédé selon la revendication 1 ou 2, dans lequel l'acquisition d'informations de position des ordures dans la région contrôlée comprend :
l'acquisition (404a) d'un bord d'intersection entre un mur et un sol dans la région contrôlée conformément aux données contrôlées ;
la modélisation (404b) du sol conformément au bord d'intersection entre le mur et le sol dans la région contrôlée ; et
le calcul (404c) d'informations de position des ordures sur le sol modélisé.

4. Procédé selon l'une quelconque des revendications précédentes, dans lequel l'acquisition d'informations de position des ordures dans la région contrôlée comprend :
la mise en correspondance d'une région à ordures, où se trouvent les ordures dans les données contrôlées, avec une région où se trouve le robot à ordures, dans au moins une image-échantillon, l'image-échantillon étant une image précédemment enregistrée par un appareil de contrôle quand le robot à ordures se déplace ou séjourne dans la région contrôlée, et chaque image-échantillon étant liée à des informations de position rapportées de manière synchrone par le robot à ordures ; et
si la mise en correspondance réussit, la détermination des informations de position liées à l'image-échantillon correspondante en tant qu' informations de position des ordures dans la région contrôlée.

5. Procédé selon la revendication 4, le procédé comprenant en outre :
l'enregistrement d'au moins une image comme image-échantillon quand le robot à ordures se déplace ou séjourne dans la région contrôlée ;
la réception d'informations de position rapportées de manière synchrone par le robot à ordures dans le processus d'enregistrement ;
l'identification d'une région où se trouve le robot à ordures dans chaque image-échantillon ; et
la liaison et le stockage de chaque image-échantillon, de la région où se trouve le robot à ordures dans l'image-échantillon, et des informations de position rapportées de manière synchrone par le robot à ordures.

6. Procédé selon l'une quelconque des revendications 1 à 5, le procédé comprenant en outre :
la détection que des ordures se trouvent ou non sur le sol dans la région contrôlée ; et
l'exécution de l'étape d'acquisition d'informations de position des ordures dans la région contrôlée si les ordures se trouvent sur le sol dans la région contrôlée.

7. Procédé d'élimination automatique d'ordures, **caractérisé en ce que** le procédé comprend, au niveau d'un robot à ordures :
la réception (406, 507, 612) d'informations de position d'ordures envoyées par un appareil de contrôle qui exécute le procédé selon l'une quelconque des revendications 1 à 6 ; et
l'élimination (407, 508, 613) des ordures conformément aux informations de position.

8. Dispositif d'élimination d'ordures, **caractérisé en ce que** le dispositif comprend :
un module d'acquisition (720), configuré pour acquérir des données contrôlées d'une région contrôlée, les données contrôlées comprenant au moins une trame d'image ;
un module de détection (740), configuré pour détecter, conformément aux données contrôlées , que des ordures se trouvent ou non dans la région contrôlée ;
un module de localisation (760), configuré pour , si des ordures se trouvent dans la région contrôlée, acquérir des informations de position des ordures dans la région contrôlée ; et
un module d'envoi (780), configuré pour envoyer les informations de position des ordures à un robot à ordures, le robot à ordures étant configuré pour éliminer les ordures conformément aux informations de position, **caractérisé en ce que** le module de détection (740) est configuré pour identifier qu'une action d'un utilisateur existe ou non dans l'au moins une trame d'image ; et si une action d'utilisateur existe dans l'au moins une trame d'image, détecter qu'un objet mouvant correspondant à l'action est présent ou non dans l'au moins une trame d'image ; et
dans lequel si un objet mouvant correspondant à l'action est présent dans l'au moins une trame d'image, le module de détection (740) est configuré pour identifier que l'objet mouvant représente ou non des ordures conformément à une bibliothèque de caractéristiques d'ordures prédéfinies.

9. Dispositif selon la revendication 8, dans lequel le module de détection (740) est configuré pour identifier que l'objet mouvant représente ou non des ordures conformément à une bibliothèque de caractéristiques d'ordures prédéfinies, à l'aide d'un logiciel de reconnaissance d'images pour comparer l'objet capturé dans une image collectée par l'appareil de contrôle avec une bibliothèque de caractéristiques contenant des images d'objets jugés être des ordures.

10. Dispositif selon la revendication 8 ou 9, dans lequel le module de localisation comprend :
un sous-module d'acquisition (762), configuré pour acquérir un bord d'intersection entre un mur et un sol dans la région contrôlée conformément aux données contrôlées ;
un sous-module de modélisation (764), configuré pour modéliser le sol conformément au bord d'intersection entre le mur et le sol dans la région contrôlée ; et
un sous-module de calcul (766), configuré pour calculer des informations de position des ordures sur le sol modélisé.

11. Dispositif d'élimination d'ordures, **caractérisé en ce que** le dispositif comprend :
un module de réception (920), configuré pour recevoir des informations de position d'ordures envoyées par un appareil de contrôle selon l'une quelconque des revendications 8 à 10 ; et
un module d'élimination (940), configuré pour éliminer les ordures conformément aux informations de position.

12. Dispositif d'élimination d'ordures, **caractérisé en ce que** le dispositif comprend :
un processeur (1018) ; et
une mémoire (1004) destinée à mémoriser des instructions exécutables par le processeur ;
dans lequel le processeur est configuré pour exécuter le procédé selon l'une quelconque des revendications 1 à 6.

13. Dispositif d'élimination d'ordures, **caractérisé en ce que** le dispositif comprend :
un processeur (1118) ; et
une mémoire (1004) destinée à mémoriser des instructions exécutables par le processeur ;
dans lequel le processeur est configuré pour exécuter le procédé selon la revendication 7.

14. Programme informatique qui, à son exécution sur un processeur d'un appareil de contrôle, amène ce dernier à exécuter le procédé selon l'une quelconque des revendications 1 à 6.

15. Programme informatique qui, à son exécution sur un processeur d'un dispositif d'élimination d'ordures, amène ce dernier à exécuter le procédé selon la revendication 7.
